# EUROPEAN PATENT APPLICATION

(11) **EP 4 757 332 A1**
(43) Date of publication of application: **10.06.2026**
(21) Application number: 25217300.0
(22) Date of filing: 20.11.2025
(51) Int. Cl.: H04N 23/61, H04N 5/222, H04N 23/65

(54) **CAMERA DEVICE, VIDEO SYSTEM, AND NON-TRANSITORY COMPUTER READABLE STORAGE MEDIUM**

(30) Priority: 06.12.2024 JP 2024213145
(71) Applicant: amnimo Inc., Musashino-shi, Tokyo 180-8750 (JP)
(72) Inventor: Kojima, Osamu, Musashino-shi, Tokyo, 180-8750 (JP); Wada, Atsushi, Musashino-shi, Tokyo, 180-8750 (JP)
(74) Representative: Grünecker Patent- und Rechtsanwälte PartG mbB

(57) **Abstract**

A camera device includes a camera that captures a video, a communication device that communicates with an external device, and a processor that is connected to the camera and the communication device. The processor generates a still image based on the video captured by the camera, and periodically transmits the generated still image to the external device by controlling the communication device.

## Description

### BACKGROUND

### Technical Fields

The present disclosure relates to a camera device, a video system, and a non-transitory computer readable storage medium. Priority is claimed on Japanese Patent Application No. 2024-213145, filed on December 6, 2024, the contents of which are incorporated herein by reference.

### Description of Related Art

In recent years, there has been increased opportunity to use video systems that aggregate videos captured with surveillance cameras or portable cameras and provide the videos to users. Such video systems are used, for example, for monitoring facilities or equipment and monitoring crowds in streets, and for security purposes. In recent years, a video system in which an image processing device called an edge gateway is provided near a camera device, a still image is generated based on a video captured by the camera device, and the still image is periodically transmitted to a center system has also been described (for example, "Enhanced Video Management System", [online], retrieved on December 1, 2024) Internet <URL:https://amnimo.com/en/service/e_vms/>).

Incidentally, in the video system disclosed in "Enhanced Video Management System", [online], retrieved on December 1, 2024) Internet <URL:https://amnimo.com/en/service/e_vms/>, a still image is periodically transmitted to the center system. Therefore, there is an advantage of significantly reducing an amount of transmitted data compared to a system that transmits a moving image. However, in video systems of the related art, as described above, it is necessary to separately install an image processing device called an edge gateway, which increases a cost and requires an installation space.

The present disclosure has been made in view of the above circumstances and an object of the present disclosure is to provide a camera device, a video system, and a non-transitory computer readable storage medium capable of generating a still image and periodically transmitting the generated still image without separately installing an image processing device.

### SUMMARY

To solve the above problems, according to a first aspect of the present disclosure, a camera device (10) includes a camera (12) that captures a video; a communication device (11) that communicates with an external device (2); and a processor (18) that is connected to the camera and the communication device. The processor generates a still image based on the video captured by the camera and periodically transmits the generated still image to the external device by controlling the communication device.

According to a second aspect of the present disclosure, in the camera device according to the first aspect of the present disclosure, in response to an instruction from outside, the processor may change a frequency at which the still image is generated and a frequency at which the generated still image is transmitted.

According to a third aspect of the present disclosure, the camera device according to the first or second aspect of the present disclosure may further include a sensor (15) that detects at least one of a position and an acceleration. The processor may change a frequency at which the still image is generated and a frequency at which the generated still image is transmitted in accordance with a detection result of the sensor.

According to a fourth aspect of the present disclosure, in the camera device according to any one of the first to third aspects of the present disclosure, the processor may change a frequency at which the still image is generated and a frequency at which the generated still image is transmitted in accordance with an analysis result of the video captured by the camera.

According to a fifth aspect of the present disclosure, in the camera device according to any one of the first to fourth aspects of the present disclosure, the processor may temporarily generate and transmit the still image in accordance with an analysis result of the video captured by the camera.

According to a sixth aspect of the present disclosure, the camera device according to any one of the first to fifth aspects of the present disclosure may further include a microphone (13) that acquires an ambient sound. The processor may change a frequency at which the still image is generated and a frequency at which the generated still image is transmitted in accordance with an analysis result of the ambient sound acquired by the microphone.

According to a seventh aspect of the present disclosure, the camera device according to any one of the first to sixth aspects of the present disclosure may further include a microphone (13) that acquires an ambient sound. The processor may temporarily generate and transmit the still image in accordance with the analysis result of the ambient sound acquired by the microphone.

According to an eighth aspect of the present disclosure, in the camera device according to any one of the first to seventh aspects of the present disclosure, the processor may stop at least one of the camera and the communication device when a video is not captured by the camera.

According to a ninth aspect of the present disclosure, the camera device according to any one of the first to eighth aspects of the present disclosure may further include a battery (19) that supplies power to at least the processor, the camera, and the communication device.

According to a tenth aspect of the present disclosure, the camera device according to any one of the first to ninth aspects of the present disclosure may further include a storage medium (14) that stores the video captured by the camera. The processor may store the video captured by the camera in the storage medium separately from the transmission of the still image, and may cause the external device to transmit the video stored in the storage medium when a predetermined condition is satisfied.

A video system (1) according to the first aspect of the present disclosure includes the camera device (10) according to any one of the first to tenth aspects; and a video provision device (20) serving as the external device that is connected to be able to communicate with the camera device, generates a combined image including the still image periodically transmitted from the camera device, and outputs the generated combined image.

According to the second aspect of the present disclosure, the video system according to the first aspect of the present disclosure may further include a terminal device (30) that is connected to be able to communicate with the video provision device and displays the combined image output from the video provision device.

According to the third aspect of the present disclosure, in the video system according to the second aspect of the present disclosure, in response to an instruction from the terminal device, the video provision device may instruct the camera device to change a frequency at which the still image is generated and a frequency at which the generated still image is transmitted. In response to an instruction from the video provision device, the camera device may change the frequency at which the still image is generated and the frequency at which the generated still image is transmitted.

According to an aspect of the present disclosure, a non-transitory computer readable storage medium that stores a program that causes a computer (18) connected to a camera (12) capturing a video and a communication device (11) communicating with an external device (20) to: generate a still image based on the video captured by the camera, and periodically transmit the generated still image to the external device by controlling the communication device.

According to the present disclosure, there is an advantage of generating a still image and periodically transmitting the generated still image without separately installing an image processing device.

Further features and aspects of the present disclosure will become apparent from the following detailed description of exemplary embodiments with reference to the attached drawings.

### BRIEF DESCRIPTION OF THE DRAWINGS

FIG. 1 illustrates an overall configuration of a video system according to an embodiment of the present disclosure.
FIG. 2 illustrates a hardware configuration of a camera device according to an embodiment of the present disclosure.
FIG. 3 is a flowchart illustrating an example of an operation of the camera device according to an embodiment of the present disclosure.
FIG. 4 schematically illustrates an example of a video provided by a video provision device according to an embodiment of the present disclosure.

### DETAILED DESCRIPTION OF THE EMBODIMENTS

Hereinafter, a camera device, a video system, and a non-transitory computer readable storage medium according to an embodiment of the present disclosure will be described in detail with reference to the drawings.

### Video System

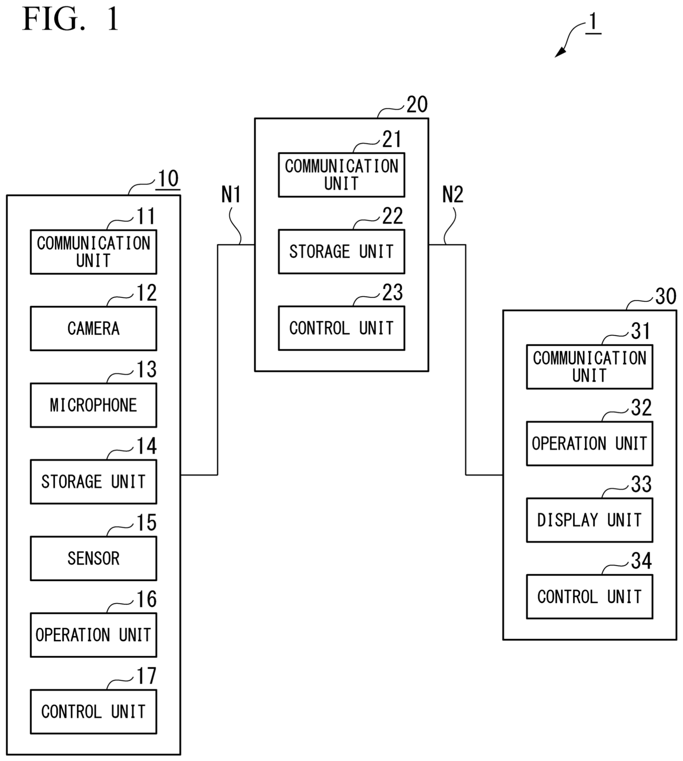

FIG. 1 illustrates an overall configuration of a video system according to an embodiment of the present disclosure. As illustrated in FIG. 1, a video system 1 includes a camera device 10, a video provision device 20, and a terminal device 30. The camera device 10 and the video provision device 20 are connected to be able to communicate via a network N1. The video provision device 20 and the terminal device 30 are connected to be able to communicate via a network N2.

The network N1 is, for example, a mobile communication network that provides a mobile network operator (MMO). The network N2 is a wide area network (WAN) such as the Internet. The network N1 may include a network that executes wired communication in addition to a network that executes wireless communication. The network N2 may be any of a network capable of executing wireless communication, a network capable of executing wireless communication, and a network capable of executing both wired communication and wireless communication.

### Camera Device

The camera device 10 is, for example, a portable camera called a wearable camera or a body worn camera (BWC). For example, the camera device 10 is worn and used by a user such as a security guard. The camera device 10 is not limited to a portable camera and may be a fixed camera such as a surveillance camera or a security camera installed at any place. For example, the camera device 10 may be a panning/tilting/zooming (PTZ) camera, a 360-degree camera, or another type of camera mounted on a building wall, a utility pole, or a telephone pole.

The PTZ camera is a camera that can execute panning, tilting, and zooming through a remote operation. Panning refers to a horizontal (right-left) movement, tilting refers to a vertical (up-down) movement, and zooming refers to enlarging and reducing a captured image. A 360-degree camera is a camera capable of executing imaging in all directions at 360 degrees. In FIG. 1, only one camera device 10 is illustrated, but the number of camera devices 10 may be any number.

As illustrated in FIG. 1, the camera device 10 includes a communication unit 11 (communication device), a camera 12, a microphone 13, a storage unit 14, a sensor 15, an operation unit 16, and a control unit 17. The communication unit 11 executes communication via the network N1 under the control of the control unit 17. For example, the communication unit 11 executes communication with the video provision device 20 (external device) via the network N1. The communication unit 11 can also execute communication with the video provision device 20 via a communication line (for example, the Internet) other than the network N1.

The camera 12 includes, for example, an image sensor such as a charge coupled device (CCD) sensor or a complementary metal oxide semiconductor (CMOS) sensor and captures a video under the control of the control unit 17. The camera 12 outputs the captured video as a digital video signal. The microphone 13 includes, for example, a high-sensitivity omnidirectional microphone and acquires an ambient sound, a voice, or the like and acquires an ambient sound, a voice, or the like under the control of the control unit 17. The microphone 13 outputs the acquired ambient sound or the like as a digital sound signal.

The storage unit 14 stores the digital video signal output from the camera 12 and the digital sound signal output from the microphone 13. For example, the storage unit 14 includes a slot in which a memory card (storage medium) can be inserted and removed, and stores the digital video signal output from the camera 12 and the digital sound signal output from the microphone 13 in the memory card inserted in the slot.

The sensor 15 includes, for example, a position sensor or an acceleration sensor and detects whether the camera device 10 is moving. As the position sensor, a sensor using a positional function of a Global Positional System (GPS) or the like can be used. The position sensor is not limited to the sensor using the positional function of the GPS, and a sensor that detects a position in accordance with any positional method can be used.

The operation unit 16 outputs an instruction (an instruction for the camera device 10) to the control unit 17 in response to an operation by a user using the camera device 10. The camera device 10 may include a small display device such as a liquid crystal device. Alternatively, the camera device 10 may include a touch panel liquid crystal display device that has both a display function and an operation function of the operation unit 16.

The control unit 17 generally controls an operation of the camera device 10. For example, the control unit 17 generates a still image based on a video captured by the camera 12. The control unit 17 controls the communication unit 11 such that the generated still image is periodically transmitted to the video provision device 20. Through the process of the control unit 17, the generation of the still image and the periodic transmission of the generated still image can be executed without providing an image processing device called an edge gateway necessary in the related art. A frequency (cycle) at which a still image is generated and transmitted is set in advance in, for example, the camera device 10. The control unit 17 generates and transmits the still image in accordance with preset content.

The control unit 17 can change the frequency at which the still image is generated and the frequency at which the generated still image is transmitted. For example, in response to an instruction from the outside, the control unit 17 changes the frequencies at which the still image is generated and transmitted. Here, the instruction from the outside is, for example, an instruction from the terminal device 30 input via the network N2, the video provision device 20, and the network N1 (an instruction from a user operating the terminal device 30), or an instruction from a user using the camera device 10.

In accordance with a detection result of the sensor 15, the control unit 17 changes the frequencies at which the still image is generated and transmitted. Specifically, the control unit 17 determines whether the camera device 10 is moving or stopping in accordance with the detection result of the sensor 15, and changes the frequencies at which the still image is generated and transmitted in accordance with a determination result. For example, when it is determined that the camera device 10 is moving, the control unit 17 relatively increases the frequencies at which the still image is generated and transmitted. When it is determined that the camera device 10 is stopping, the control unit 17 relatively decreases the frequencies at which the still image is generated and transmitted.

The control unit 17 analyzes an image captured by the camera 12 and changes the frequencies at which the still image is generated and transmitted in accordance with an analysis result of the image. For example, when it is detected that the number of people located within a field of view of the camera 12 exceeds a given number as the analysis result of the image captured by the camera 12, the control unit 17 increases the frequencies at which the still image is generated and transmitted. When it is detected that an emergency event such as a fall of a person, violence, or a traffic accident occurs as an analysis result of an image captured by the camera 12, the control unit 17 temporarily (aperiodically) generates and transmits the still image.

The control unit 17 analyzes an ambient sound acquired by the microphone 13 and changes the frequencies at which the still image is generated and transmitted in accordance with an analysis result of the ambient sound. For example, when it is detected that a volume of the ambient sound exceeds a given amount as an analysis result of the ambient sound acquired by the microphone 13, the control unit 17 increases the frequencies at which the still image is generated and transmitted. When it is detected that an emergency event such as a scream, a collision, or an explosion occurs as an analysis result of the ambient sound acquired by the microphone 13, the control unit 17 temporarily (aperiodically) generates and transmits the still image.

The control unit 17 executes power saving control as necessary. For example, when a video is not captured by the camera 12, the control unit 17 reduces unnecessary power consumption by stopping at least one of the communication unit 11 and the camera 12. The control unit 17 may stop the microphone 13, the storage unit 14, the sensor 15, and the operation unit 16 in addition to the communication unit 11 and the camera 12. The control unit 17 may switch an operation mode from a normal operation mode to a low power consumption mode to reduce own power consumption.

Apart from the transmission of the still image, the control unit 17 may also store a video (moving image) captured by the camera 12 in a memory card of the storage unit 14 and cause the video provision device 20 to transmit the video stored in the memory card when a predetermined condition is satisfied. The predetermined condition is that, for example, the communication unit 11 is allowed to be able to communicate with the video provision device 20 via a fixed Internet line through Wi-Fi (registered trademark). When the predetermined condition is satisfied, the video is transmitted to the video provision device 20 via a fixed Internet rather than the network N1 illustrated in FIG. 1. In this way, it is possible to reduce a communication load via the network N1.

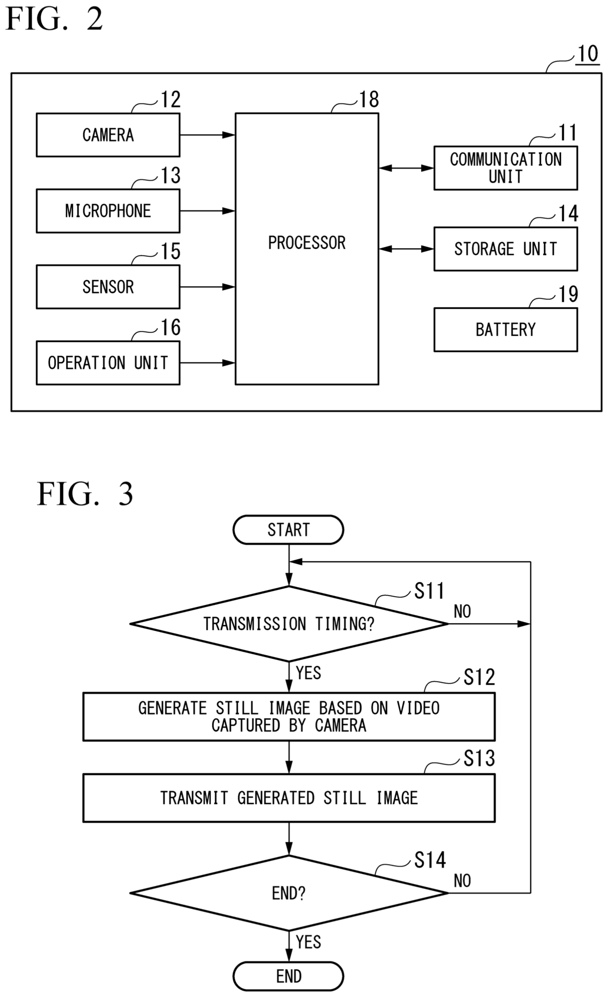

FIG. 2 illustrates a hardware configuration of a camera device according to an embodiment of the present disclosure. In FIG. 2, the same reference numerals are given to constituents corresponding to the constituents illustrated in FIG. 1. As illustrated in FIG. 2, the camera device 10 includes a processor 18 and a battery 19 in addition to the communication unit 11, the camera 12, the microphone 13, the storage unit 14, the sensor 15, and the operation unit 16.

The processor 18 is, for example, a central processing unit (CPU) or a micro processor unit (MPU). The communication unit 11, the camera 12, the microphone 13, the storage unit 14, the sensor 15, and the operation unit 16 are connected to the processor 18. A function of the control unit 17 illustrated n FIG. 1 is implemented by the processor 18 executing a program for implementing the function. That is, the function of the control unit 17 is implemented by software and hardware resources in cooperation. The function of the control unit 17 is implemented by the software and hardware resources in cooperation. For example, it is very easy to execute updating, deletion, addition, and the like of the function.

It is preferable to implement the function of the control unit 17 by software and hardware resources in cooperation, but this does not preclude the implementation of the function using dedicated hardware. The function of the control unit 17 may be implemented by, for example, hardware such as a field-programmable gate array (FPGA), a large scale integration (LSI), or an application specific integrated circuit (ASIC).

The battery 19 supplies power for operating the camera device 10. Specifically, the battery 19 supplies power to the communication unit 11, the camera 12, the microphone 13, the storage unit 14, the sensor 15, the operation unit 16, and the processor 18. The battery 19 may be a primary cell or a secondary cell. Alternatively, the battery 19 may be a battery that includes a fuel cell, a capacitor, or a power generation circuit performing environmental power generation (so-called energy harvest) such as a solar cell).

### Video Provision Device

The video provision device 20 is connected to be able to communicate with the camera device 10 and the terminal device 30. The video provision device 20 generates a combined image including a still image periodically transmitted from the camera device 10 and provides the combined image to the terminal device 30. For example, the video provision device 20 generates a combined image including still images periodically transmitted from the plurality of camera devices 10 and provides the combined image. Alternatively, the video provision device 20 generates a combined image including a still image periodically transmitted from the camera device 10 and a still image periodically transmitted from a fixed camera such as a surveillance camera or a security camera and provides the combined image. The video provision device 20 can also provide a video (moving image) captured by the camera device 10 or a fixed camera.

The video provision device 20 includes a communication unit 21, a storage unit 22, and a control unit 23. The communication unit 21 communicates with the camera device 10 via the network N1 and communicates with the terminal device 30 via the network N2 under the control of the control unit 23. For example, the communication unit 21 can communicate with the camera device 10 via a fixed Internet in addition to the network N1.

The storage unit 22 stores a still image and a video (moving image) transmitted from the camera device 10 under the control of the control unit 23. The storage unit 22 stores a still image or a video (moving image) transmitted from a fixed camera such as a monitoring camera or a security camera under the control of the control unit 23. The storage unit 22 is realized by, for example, a storage device such as a memory, a hard disk drive (HDD), or a solid state drive (SSD).

The control unit 23 is connected to the communication unit 21 and the storage unit 22 to generally control an operation of the video provision device 20. The control unit 23 causes the storage unit 22 to store a still image or the like periodically transmitted from the camera device 10 or the like. The control unit 23 generates a combined image including a still image periodically transmitted from the camera device 10 or the like. The control unit 23 controls the communication unit 21 such that the generated combined image is output (provided) to the terminal device 30.

For example, based on an instruction from the outside (for example, the terminal device 30), the control unit 23 instructs the camera device 10 to change a frequency at which a still image is generated and a frequency at which the generated still image is transmitted. Based on an instruction from a user using the video provision device 20, the control unit 23 may instruct the camera device 10 to change the frequency at which the still image is generated and the frequency at which the generated still image is transmitted.

A function of the video provision device 20 is implemented by hardware such as a CPU executing a program that implements the function. That is, the function of the video provision device 20 is implemented by software and hardware resources in cooperation. The function of the video provision device 20 is implemented by the software and hardware resources in cooperation so that, for example, it is very easy to execute updating, deletion, addition, and the like of the function.

It is preferable to implement the function of the video provision device 20 by software and hardware resources in cooperation, but this does not preclude the implementation of the function using dedicated hardware. The function of the video provision device 20 may be implemented by, for example, hardware such as an FPGA, an LSI, or an ASIC.

### Terminal Device

The terminal device 30 is connected to be able to communicate with the video provision device 20, receives a combined image provided from the video provision device 20, and gives a necessary instruction to the video provision device 20. The terminal device 30 is, for example, a desktop computer, a laptop computer, a tablet computer, or a smartphone and is used at a monitoring center.

The terminal device 30 includes a communication unit 31, an operation unit 32, a display unit 33, and a control unit 34. The communication unit 31 executes communication via the network N2 under the control of the control unit 34. Specifically, the communication unit 31 communicates with the video provision device 20 via the network N2.

The operation unit 32 includes, for example, an input device such as a keyboard or a pointing device, and outputs an instruction (an instruction for the terminal device 30) to the control unit 34 in response to an operation from a user using the terminal device 30. The display unit 33 includes, for example, a display device such as a liquid crystal display device and displays various types of information output from the control unit 34. The operation unit 32 and the display unit 33 may be physically separated or may be physically integrated as in a touch panel liquid crystal display device that has both a display function and an operation function.

The display unit 33 may display a combined image on an external display. For example, the display unit 33 may display a combined image on a system (video wall) configured such that a plurality of displays are arranged as a single screen.

The control unit 34 generally controls an operation of the terminal device 30 in response to an operation instruction input from the operation unit 32. For example, the control unit 34 causes the display unit 33 to display a combined image supplied from the video provision device 20 in response to an operation instruction input from the operation unit 32. Alternatively, in response to an operation instruction input from the operation unit 32, the control unit 34 instructs the camera device 10 to change frequencies at which a still image is generated and transmitted.

### Operation of Camera Device

FIG. 3 is a flowchart illustrating an example of an operation of the camera device according to an embodiment of the present disclosure. For example, the flowchart illustrated in FIG. 3 starts when the camera device 10 is powered on or the powered-on camera device 10 is instructed to start transmitting a still image.

When the process of the flowchart illustrated in FIG. 3 starts, the control unit 17 of the camera device 10 first determines whether it is a transmission timing of a still image (step S11). Specifically, the control unit 17 determines whether it is the transmission timing of the still image based on information indicating the frequency (cycle) at which the still image is generated and transmitted and which is set in advance in the camera device 10. When it is determined that it is not the transmission timing of the still image (a determination result of step S11 is "NO"), the control unit 17 repeats the process of step S11.

Conversely, when it is determined that it is the transmission timing of the still image (the determination result of step S11 is "YES"), the control unit 17 executes a process of generating the still image based on a video captured by the camera 12 (step S12). Subsequently, the control unit 17 controls the communication unit 11 of the camera device 10 and transmits the generated still image to the video provision device 20 (step S13).

Subsequently, the control unit 17 determines whether an instruction to end the transmission of the still image is given (step S14). When it is determined that the instruction to end the transmission of the still image is not given (a determination result of step S14 is "NO"), the control unit 17 returns to the process of step S11. The processes of the above-described steps S11 to S13 are repeatedly executed while the determination result of step S14 is "NO". Accordingly, the still image generated based on the video captured by the camera 12 is periodically transmitted to the video provision device 20.

When it is determined that the instruction to end the transmission is given (the determination result of step S14 is "YES), the control unit 17 finishes the series of processes illustrated in FIG. 3. In step S14, instead of determining whether the instruction to end the transmission of the still image is given, it may be determined whether power has been shut off.

Here, the frequency (cycle) at which the still image is generated and transmitted and which is set in advance in the camera device 10 can be changed. For example, when an instruction has been given from the terminal device 30, the video provision device 20 instructs the camera device 10 to change the frequencies at which the still image is generated and transmitted in response to an instruction from the terminal device 30. In response to an instruction from the video provision device 20, the control unit 17 of the camera device 10 changes the frequencies at which the still image is generated and transmitted.

For example, the control unit 17 of the camera device 10 changes the frequencies at which the still image is generated and transmitted in accordance with a detection result of the sensor 15. For example, the control unit 17 determines whether the camera device 10 is moving or stopping in accordance with the detection result of the sensor 15, and changes the frequencies at which the still image is generated and transmitted in accordance with a determination result.

For example, the control unit 17 of the camera device 10 analyzes an image captured by the camera 12 and changes the frequencies at which the still image is generated and transmitted in accordance with an analysis result of the image. For example, the control unit 17 increases the frequencies at which the still image is generated and transmitted when I tis detected that the number of people located within a field of view of the camera 12 exceeds a given number as the analysis result of the image captured by the camera 12.

For example, the control unit 17 of the camera device 10 analyzes an ambient sound acquired by the microphone 13 and changes the frequencies at which the still image is generated and transmitted in accordance with an analysis result of the ambient sound. For example, when a volume of the ambient sound exceeds a given amount as an analysis result of the ambient sound acquired by the microphone 13, the control unit 17 increases the frequencies at which the still image is generated and transmitted.

When the frequencies at which the still image is generated and transmitted are changed, a timing at which "YES" is determined in step S11 is changed. For example, when the frequencies at which the still image is generated and transmitted are considered to be high, a timing at which "YES" is determined in step S11 is advanced and a time interval at which previous step S11 is determined to be "YES" and current step S11 is then determined to be "YES" becomes shorter. In this way, the frequencies at which the still image is generated and transmitted are changed.

Whenever the still image transmitted from the camera device 10 is received in the communication unit 21, the control unit 23 of the video provision device 20 stores the still image in the storage unit 22 and generates a combined video including the still image. The control unit 23 controls the communication unit 21 such that the generated combined video is output (provided) to the terminal device 30.

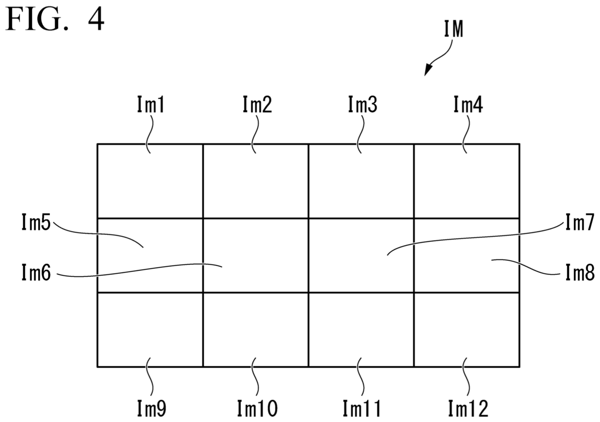

FIG. 4 schematically illustrates an example of a video provided by the video provision device according to the embodiment of the present disclosure. A combined image IM exemplified in FIG. 4 is an image in which four different still images are arranged horizontally and three different still images are arranged vertically. That is, the combined image IM exemplified in FIG. 4 is, for example, an image in which still images Im1 to Im12 transmitted from twelve camera devices 10 are combined.

For example, when the combined image IM is displayed on the display unit 33 of the terminal device 30, a user of the terminal device 30 can view the still images based on the video captured by the twelve cameras at one time. The still images are rarely transmitted at the same timing from the camera devices 10 and are transmitted generally at different times. Therefore, content of the combined image IM displayed on the display unit 33 of the terminal device 30 is partially updated at a timing at which the still image is transmitted from each camera device 10. For example, when a still image transmitted from a certain camera device 10 is the still image Im4, a top right end of the combined image IM (a portion in which the still image Im4 is displayed) is partially updated every time the still image Im4 is transmitted from the camera.

As described above, according to the embodiment of the present disclosure, the camera device 10 includes the camera 12 that captures a video, the communication unit 11 that communicates with the video provision device 20, and the processor 18 that is connected to the camera 12 and the communication unit 11. The processor 18 executes generation of a still image based on a video captured by the camera 12 and periodic transmission of the generated still image to the video provision device 20 by controlling the communication unit 11. Accordingly, the still image is generated and the generated still image is periodically transmitted by only the camera device 10 without separately providing an image processing device.

In the present embodiment, the processor 18 changes the frequency at which the still image is generated and the frequency at which the generated still image is transmitted in accordance with an analysis result of the video captured by the camera 12. Accordingly, for example, in a case where the camera device 10 is used for event security, the frequency at which the still image is transmitted can be increased and a security personnel can frequently ascertain a situation when people are overcrowded. Alternatively, when it suddenly start to rain and many people begin moving irregularly in search of a shelter for avoiding the rain, the frequencies at which the still image is generated and transmitted can be increased. That is, the frequencies at which the still image is generated and transmitted can be changed in accordance with a change in a situation of a monitoring target place.

As described above, the camera device, the video system, and the program according to the embodiment of the present disclosure have been described, but the present disclosure can be freely changed within the scope of the present disclosure without being limited to the above embodiments. For example, the video provision device 20 described in the above-described embodiments may be realized as a server device or may be realized as a cloud computing system.

In the above-described embodiment, the video provision device 20 provides a video to the terminal device 30 via the network N2, as described above. However, for example, when the video provision device 20 is installed in a monitoring center, the video provision device 20 and the terminal device 30 may be integrated into a single unit. In this case, a video is displayed on a display device (a configuration corresponding to the display unit 33) connected to the video provision device 20.

## Claims

1. A camera device comprising:
a camera that captures a video;
a communication device that communicates with an external device; and
a processor that is connected to the camera and the communication device,
wherein the processor generates a still image based on the video captured by the camera, and periodically transmits the generated still image to the external device by controlling the communication device.

2. The camera device according to claim 1,
wherein, in response to an instruction from outside, the processor changes a frequency at which the still image is generated and a frequency at which the generated still image is transmitted.

3. The camera device according to claim 1, further comprising:
a sensor that detects at least one of a position and an acceleration,
wherein the processor changes a frequency at which the still image is generated and a frequency at which the generated still image is transmitted in accordance with a detection result of the sensor.

4. The camera device according to claim 1,
wherein the processor changes a frequency at which the still image is generated and a frequency at which the generated still image is transmitted in accordance with an analysis result of the video captured by the camera.

5. The camera device according to claim 1,
wherein the processor temporarily generates and transmits the still image in accordance with an analysis result of the video captured by the camera.

6. The camera device according to claim 1, further comprising:
a microphone that acquires an ambient sound,
wherein the processor changes a frequency at which the still image is generated and a frequency at which the generated still image is transmitted in accordance with an analysis result of the ambient sound acquired by the microphone.

7. The camera device according to claim 1, further comprising:
a microphone that acquires an ambient sound,
wherein the processor temporarily generates and transmits the still image in accordance with an analysis result of the ambient sound acquired by the microphone.

8. The camera device according to claim 1,
wherein the processor stops at least one of the camera and the communication device when a video is not captured by the camera.

9. The camera device according to claim 1, further comprising:
a battery that supplies power to at least the processor, the camera, and the communication device.

10. The camera device according to claim 1, further comprising:
a storage medium that stores the video captured by the camera,
wherein the processor stores the video captured by the camera in the storage medium separately from the transmission of the still image, and causes the external device to transmit the video stored in the storage medium when a predetermined condition is satisfied.

11. A video system comprising:
the camera device according to any one of claims 1 to 10; and
a video provision device serving as the external device that is connected to be able to communicate with the camera device, generates a combined image including the still image periodically transmitted from the camera device, and outputs the generated combined image.

12. The video system according to claim 11, further comprising:
a terminal device that is connected to be able to communicate with the video provision device and displays the combined image output from the video provision device.

13. The video system according to claim 12,
wherein, in response to an instruction from the terminal device, the video provision device instructs the camera device to change a frequency at which the still image is generated and a frequency at which the generated still image is transmitted, and
wherein, in response to an instruction from the video provision device, the camera device changes the frequency at which the still image is generated and the frequency at which the generated still image is transmitted.

14. A non-transitory computer readable storage medium that stores a program that causes a computer connected to a camera capturing a video and a communication device communicating with an external device to:
generate a still image based on the video captured by the camera; and
periodically transmit the generated still image to the external device by controlling the communication device.
